# DEMANDE DE BREVET EUROPEEN

(11) **EP 1 669 507 A2**
(43) Date de publication de la demande: **14.06.2006**
(21) Numéro de dépôt: 05292634.2
(22) Date de dépôt: 09.12.2005
(51) Int. Cl.: E04C 2/288, F24D 3/16

(54) **Procédé de réalisation d'éléments de construction préfabriqués, et éléments ainsi obtenus**

(30) Priorité: 10.12.2004 FR 0413169
(71) Demandeur: Macchi, Pierre, 68270 Wittenheim (FR); Macchi, Karine, 68270 Wittenheim (FR)
(72) Inventeur: Macchi, Pierre, 68270 Wittenheim (FR); Macchi, Karine, 68270 Wittenheim (FR)
(74) Mandataire: Burkard, Thierry

(57) **Abrégé**

L'invention concerne un procédé de réalisation d'éléments de structure préfabriqués, plus particulièrement destinés à la réalisation de structures de bâtiments, comme des murs, des cloisons ou des pans de toiture, ainsi que les éléments préfabriqués obtenus par la mise en oeuvre de procédé.

Le procédé selon l'invention comporte une étape de prédécoupe d'un matériau isolant pour y former des éléments d'ancrage (5) qui permettront de maintenir ces derniers sur une base en béton (1) précoulée, sans recours à des moyens de fixation complémentaires une fois ladite plaque de matériau (4) isolant pressée contre la base en béton.

Application ; construction de locaux d'habitation ou professionnels

## Description

La présente invention concerne un procédé de réalisation d'éléments de structure préfabriqués, plus particulièrement destinés à la réalisation de structures de bâtiments, comme des murs, des cloisons ou des pans de toiture.

L'invention concerne également les éléments préfabriqués obtenus par la mise en oeuvre de procédé.

L'évolution des techniques modernes de construction de bâtiments, notamment à usage d'habitation ou de locaux professionnels, a suscité diverses recherches destinées à la fois à accélérer et simplifier les opérations de construction, tout en diminuant les coûts, sans pour autant obérer les qualités d'isolation et la modularité des bâtiments.

La notion de construction préfabriquée a ainsi connu depuis plusieurs années un essor certain dans le domaine du bâtiment.

Selon cette conception, on utilise pour ériger le bâtiment prévu, qu'il s'agisse d'un local à usage professionnel ou d'habitation, des éléments ou des ensembles d'éléments qui sont fabriqués en usine et qui sont assemblés sur le chantier pour former la structure complète du bâtiment.

Cette conception présente des avantages évidents en terme de coûts, puisqu'il sera possible de pré-réaliser les différents éléments constitutifs de la structure du bâtiment en usine à partir des plans préalablement dressés.

Il ne sera ainsi plus nécessaire de monter ces différents éléments de manière séparée, au fur et à mesure et sur site, ce qui induisait parfois des délais en raison notamment de la nécessité de prévoir des temps d'attente ou de prise, ou d'interrompre les opérations à raison de paramètres extérieurs telle la météorologie.

Il est bien évident qu'il est à la fois beaucoup plus rapide et plus facile d'ériger un mur en assemblant des éléments fabriqués en usine que d'utiliser la technique classique nécessitant un coffrage, le coulage du béton ou la montée du mur en brique ou maçonnerie classique, le résultat étant de surcroît totalement brut et nécessitant par la suite des travaux de finition, d'habillage ou autres.

Un exemple type d'éléments préfabriqués destiné à la construction d'une structure est par exemple décrit dans le document FR 2 116 622. Ce document déjà ancien décrit un panneau de façade préfabriqué, comprenant un parement extérieur et un parement intérieur de part et d'autre d'un espace intermédiaire contenant un matériau de remplissage, ces deux parements étant constitués de plaques de pierre et étant reliés l'un à l'autre par des agrafes qui traversent ledit espace et qui sont noyées à leurs extrémités dans les joints des pierres, le panneau comportant deux poutres disposées respectivement sous la tranche inférieure et sur la tranche supérieure de l'ensemble des deux parements, ces deux poutres recevant et répartissant une pression de précontrainte.

Cette technique de construction est à présent éprouvée et reconnue. Elle laisse cependant subsister divers problèmes, tel que par exemple l'isolation.

En effet, dans le cas d'un mur construit au moyen des techniques de maçonnerie classiques ou par utilisation d'éléments préfabriqués, il reste nécessaire, pour assurer l'isolation du local, de prévoir la pose d'éléments complémentaires sur les surfaces formant les murs extérieurs du bâtiment, ce qui induit des opérations supplémentaires, donc du temps et des coûts additionnels.

Il peut donc être intéressant là également de proposer une solution permettant d'intégrer ou d'associer les éléments remplissant une fonction d'isolation aux éléments de structure préfabriqués, ceci dès le stade de leur confection en usine, pour là également éviter des interventions ultérieures sur chantier.

Le document EP 1 235 037 décrit ainsi un élément thermorégulateur préfabriqué destiné à la réalisation de murs de bâtiment, composé d'un noyau en béton coulé, dans lequel des orifices passant ont été ménagés pour permettre le passage de canalisations, et contre lequel on plaque simultanément des couches de matière isolante. Pour solidariser l'ensemble avant son utilisation sur site, on prévoit à intervalle régulier des tiges de maintien qui traversent l'ensemble formé par l'élément en béton et la couche de matériaux isolants qui lui correspond. Cette modalité n'est pas pleinement satisfaisante. En effet, si elle permet en apparence d'obtenir un élément préfabriqué associant les blocs de structure et des couches de matériaux isolants, la tenue dans le temps de murs ou de parois réalisés au moyen de ces éléments laisse manifestement à désirer. Les couches isolantes ne sont aucunement intégrées aux éléments de structure, mais simplement plaquées, et leur maintien en position dépend d'éléments de fixation supplémentaires qui sont pré-installés. L'intégrité de l'ensemble formé à partir de tels éléments est donc susceptible d'être remise en question en cas d'usure de rupture ou de défaut d'un de ces éléments de fixation.

Le document WO 94 23143 décrit un procédé de fabrication d'éléments de construction en béton dans lequel on associe une base en béton et une couche de matériau isolant dans laquelle des creux ont été ménagés à intervalles réguliers. Pour obtenir un élément de construction, on positionne la plaque de matériau isolant sur la base en béton, puis après pression on vibre le béton pour provoquer l'épanchement du béton à l'intérieur des creux ménagés dans la plaque de matériau isolant. On déforme ainsi la base en béton, de manière à former des excroissances qui sont censées servir de moyens d'ancrage et qui correspondent aux emplacements des découpes ménagées dans la plaque de matériau isolant.

Cette modalité n'est pleinement satisfaisante car il suffirait qu'une pression irrégulière soit appliquée sur la plaque lorsqu'on la positionne sur la base en béton, pour que les orifices de la plaque ne soient pas pleinement remplis lors de l'opération de vibrage, pour ainsi induire un risque de désolidarisation de l'élément préfabriqué obtenu, sauf à utiliser des moyens d'ancrage ou de fixations complémentaires.

La présente invention se propose de remédier à ces différents inconvénients en proposant un procédé de réalisation de panneaux préfabriqué pour la construction de murs ou éléments de structure, dans lequel une couche de matière isolante est intégrée dans une base en béton, l'ensemble étant prêt à poser sans nécessité de prévoir des moyens chimiques ou mécaniques extérieurs pour en assurer la tenue.

Le procédé selon l'invention est caractérisé en ce qu'il comporte une étape de prédécoupe d'un matériau isolant pour y former des éléments d'ancrage qui permettront de maintenir ces derniers sur une base en béton précoulée, sans recours à des moyens de fixation complémentaires. L'invention sera mieux comprise au travers de la description donnée ci-après d'un mode de réalisation, et en référence aux dessins annexés, dans lesquels :
- la figure 1 est un diagramme représentant les différentes étapes du procédé selon l'invention, et
- la figure 2 est une vue en coupe d'un élément préfabriqué obtenu par la mise en oeuvre du procédé selon l'invention.

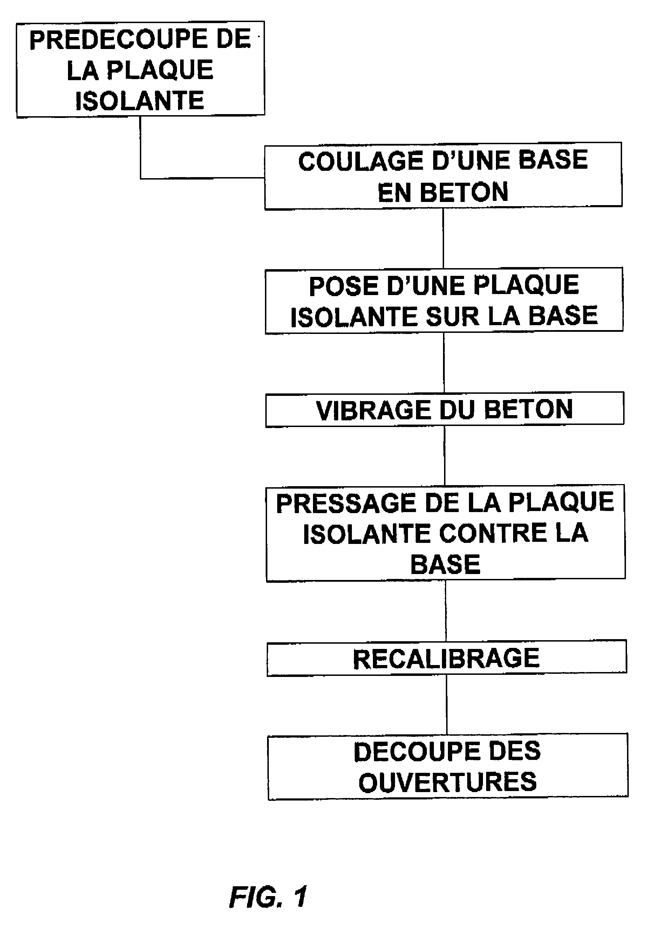

En se référant aux figures annexées, et notamment la figure 1, la réalisation d'un élément de construction préfabriqué selon l'invention suppose la mise en oeuvre d'un procédé comportant les étapes suivantes.

Dans une première étape, on coule un voile de béton à plat, sur un banc métallique, en prévoyant dès ce stade des réservations qui correspondent aux ouvertures souhaitées, telles que des portes ou des fenêtres, ainsi qu'aux différents réseaux qui alimenteront le bâtiment, comme par exemple les prises électriques ou les raccordements aux réseaux câblés ou téléphoniques.

Dès ce stade, on dispose dans la partie basse du béton, c'est à dire sur une hauteur maximum de 1m20 mesurée à partir de la limite inférieure de la base en béton, une nappe chauffante qui sera intégrée de manière à être positionnée à environ 4 centimètres du bord extérieur de la paroi interne de l'élément.

Dans un deuxième temps, après coulage du béton frais, on disposera sur les bases en béton des plaques préformées de matériau isolant, de préférence en polystyrène, de dimensions correspondantes, comportant des prédécoupes formant des extensions ou tenons. Les plaques de polystyrène isolant sont disposées sur les bases en béton de telle sorte que les tenons saillants de la paroi interne de la plaque isolante viennent en contact avec la surface extérieure de la base en béton. On cherche ainsi à assurer un parfait maintien, sans retrait possible, de la plaque isolante dès lors que le béton aura complètement pris et qu'il retiendra les tenons saillants de la plaque isolante, empêchant tout dégagement ultérieur.

Dans un troisième temps, on procède à une opération classique de vibrage du béton.

Puis, dans un quatrième temps, on presse la plaque de polystyrène contre la base en béton pour provoquer une pénétration de l'ordre de 15 mm de la paroi interne de l'élément isolant dans le béton frais. Ainsi, on réalisera une fixation à la fois solide et naturelle qui ne nécessitera pas pour son maintien le recours à d'autres éléments de fixation.

On opère ensuite le passage d'un fil chaud sur la surface extérieure du polystyrène pour recalibrer l'épaisseur du mur et compenser d'éventuels mouvements de vrille qui auraient pu survenir lors de la pose puis du pressage de la plaque isolante contre la base en béton.

Enfin dans un dernier temps, on procédera à la découpe de la plaque isolante au regard des ouvertures prédéfinies de la base en béton pour ainsi obtenir un élément préfabriqué prêt à l'usage.

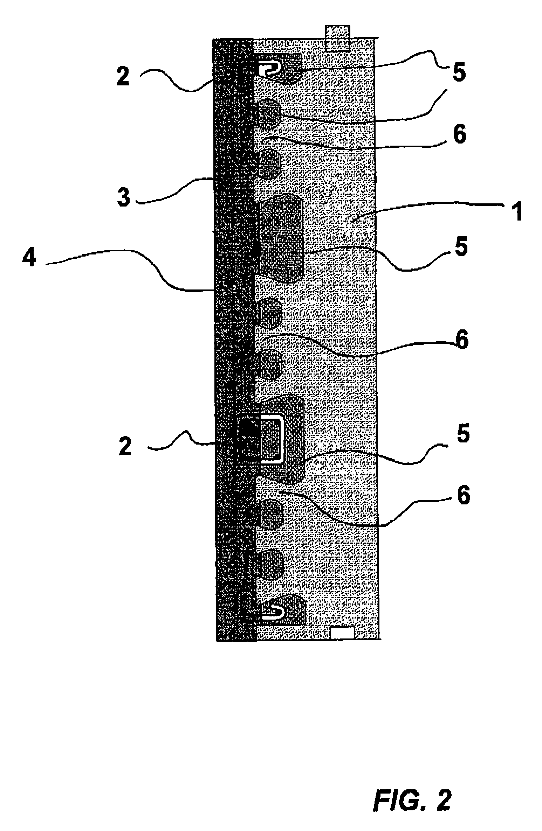

La figure 2 illustre en coupe un élément préfabriqué obtenu au moyen du procédé selon l'invention.

La base en béton (1) comporte une ou plusieurs ouvertures préformées correspondant par exemple aux portes ou fenêtres (2). La nappe chauffante (3) est disposée à proximité de la paroi intérieure de la base.

Par paroi intérieure, on entend la paroi de l'élément qui sera destinée à se trouver vers l'intérieur du bâtiment à construire. La nappe chauffante (3) est gérée par un thermostat d'ambiance de mise en chauffe progressive (non représenté). Une sonde noyée dans le voile béton permet de ne pas dépasser la température maximale de 26°C dans le panneau en béton.

La nappe (3) est limitée en hauteur, à un maximum de 1 m20 à partir de la limite inférieure de la base en béton, afin d'éviter tout risque de détérioration si les utilisateurs ou habitants souhaitent par la suite procéder à des percements dans les parois des murs, par exemple pour accrocher des éléments décoratifs.

Une plaque de matériau isolant (4) est disposée contre la surface intérieure de la base en béton (1). Les dimensions de la plaque (4) sont prédéfinies en fonction de celles de la base en béton (1) de telle sorte qu'elles puissent très exactement se superposer l'une sur l'autre. La plaque isolante (4) est prédécoupée de manière à comporter divers excroissances (5) de formes variées définissant des tenons lorsque l'on pose ladite plaque (4) sur la base en béton (1) qui vient d'être coulé. Comme le béton est encore frais, les tenons (5) pénètrent la base jusqu'à ce que les interstices (6) qui séparent chacun des tenons (5) soient complètement remplis de béton frais. La plaque isolante (4) se trouve ainsi collée contre la base en béton et la prise du béton aura pour conséquence d'emprisonner les tenons (5) à l'intérieur de ladite base (1). Pour garantir une parfaite tenue de l'isolant sur la base en béton, on exerce une pression sur la plaque (4) de telle sorte qu'elle pénètre en surface ladite base en béton (1) sur une distance (x) de quelque centimètres. Ainsi, la plaque (4) est parfaitement indissociable de l'élément préfabriqué lorsque le béton de la base (1) a pris et séché.

On obtiendra ainsi un maintien ferme dans le temps sans risque de désolidarisation. De même, le risque de défauts liés à une pression non répartie équitablement n'existe pas, puisque précisément le maintien de l'ensemble plaque isolante/base en béton est assuré par emprisonnement des éléments saillants de la plaque isolante dans la base en béton, et pas par remplissage, sans qu'il soit nécessaire de prévoir des moyens de fixation complémentaires.

## Revendications

1. Procédé de réalisation d'éléments de structure préfabriqués, **caractérisé en ce qu'**il comporte une étape de prédécoupe d'un matériau isolant pour former dans ce matériau isolant des éléments d'ancrage qui permettront de maintenir ces derniers sur une base en béton précoulée, sans recours à des moyens de fixation complémentaires.

2. Procédé selon la revendication 1, **caractérisé en ce qu'**il comporte les étapes successives suivantes :
- on coule un voile de béton à plat,
- on dispose sur la base en béton (1) obtenue une plaque de matériau isolant (4) préformée de dimensions correspondantes comportant des prédécoupes formant des éléments d'ancrage (5),
- on vibre le béton,
- on presse la plaque de matériau isolant (4) contre la base en béton (1) pour provoquer une pénétration de l'ordre de 15 mm de la paroi interne de l'isolant dans le béton frais.
- on recalibre l'épaisseur de l'ensemble,
- on découpe la plaque de matériau isolant (4) en fonction de la base en béton (1).

3. Procédé selon la revendication 2, **caractérisé en que** lors de la mise en place sur la base en béton (1) de la plaque de matériau isolant (4) préformée de dimensions correspondantes comportant des prédécoupes formant des éléments d'ancrage (5), on dispose dans la partie basse de la base (1) à une hauteur maximum de 1m20 mesurée à partir de sa limite inférieure, une nappe chauffante (3) positionnée à environ 4 centimètres du bord extérieur de la paroi interne de la base en béton (1).

4. Procédé selon l'une des revendications précédentes, **caractérisé en ce que** le matériau isolant est du polystyrène.

5. Procédé selon l'une des revendications précédentes, **caractérisé en ce que** la base en béton (1) comporte au moins une ouverture (2) préformée.

6. Procédé selon l'une des revendications précédentes, **caractérisé en ce que** les dimensions de la plaque de matériau isolant (4) sont prédéfinies en fonction de celles de la base en béton (1) de telle sorte qu'elles puissent très exactement se superposer l'une sur l'autre.

7. Procédé selon l'une des revendications précédentes, **caractérisé en ce que** les éléments d'ancrage (5) de la plaque de matériau isolant (4) prédécoupée consistent en des excroissances de formes variées définissant des tenons séparés par des interstices (6).

8. Procédé selon la revendication 7, **caractérisé en ce qu'**on pose la plaque de matériau isolant (4) sur la base en béton (1) de manière à ce que les tenons (5) pénètrent le béton jusqu'à ce que les interstices (6) qui séparent chacun des tenons (5) soient complètement remplis de béton frais.

9. Elément de structure préfabriqué, **caractérisé en qu'**il est obtenu par la mise en oeuvre des étapes suivantes :
- on coule un voile de béton à plat,
- on dispose sur la base en béton (1) obtenue une plaque de matériau isolant (4) préformée de dimensions correspondantes comportant des prédécoupes formant des éléments d'ancrage (5),
- on vibre le béton,
- on presse la plaque de matériau isolant (4) contre la base en béton (1) pour provoquer une pénétration de l'ordre de 15 mm de la paroi interne de l'isolant dans le béton frais.
- on recalibre l'épaisseur de l'ensemble,
- on découpe la plaque de matériau isolant (4) en fonction de la base en béton (1).

10. Elément de structure selon la revendication 9, **caractérisé en ce qu'**il est composé d'une base en béton (1) et d'une plaque de matériau isolant (4) comportant des éléments d'ancrage (5) prévus pour pénétrer le béton frais lorsque ladite plaque est posée sur ladite base.
